# EUROPEAN PATENT APPLICATION

(11) **EP 3 401 292 A1**
(43) Date of publication of application: **14.11.2018**
(21) Application number: 17170424.0
(22) Date of filing: 10.05.2017
(51) Int. Cl.: C04B 28/14

(54) **PLASTER-BASED MATERIAL**

(71) Applicant: Saint-Gobain Placo, 92150 Suresnes (FR)
(72) Inventor: CHENAL, Marion, 93100 MONTREUIL (FR); CHUDA, Katarzyna, 92600 ASNIERES SUR SEINE (FR); DEMATHIEU-ROELTGEN, Caroline, 77100 MEAUX (FR)
(74) Representative: Saint-Gobain Recherche

(57) **Abstract**

The invention relates to a plaster-based material comprising a metal-organic framework compound capable of trapping formaldehyde, said metal-organic framework having a porous volume from 0.2 to 2 cm³/g, in particular a plasterboard intended for the interior fittings of residential buildings, as well as its use for reducing the amount of formaldehyde in the air inside buildings.

## Description

The invention relates to a plaster-based material, in particular a plasterboard intended for the interior fittings of residential buildings, as well as its use for reducing the amount of formaldehyde in the air inside buildings.

Highly diverse composite materials are used in the field of the construction and equipping of buildings in general, in particular residential buildings or offices and public buildings (museums, cinemas, concert halls, and the like). Some of these materials, such as acoustic and/or thermal insulators, wood panels, furniture units or decorative items, use adhesives, paints and varnishes which comprise formaldehyde-based resins.

These resins are highly advantageous as they are inexpensive and have excellent performances. Their major disadvantage lies in the fact that they comprise free formaldehyde and consequently that they are capable of emitting formaldehyde over time.

In recent years, the proportion of formaldehyde in resins has greatly decreased due to the application of stricter regulations with regard to protection from undesirable emissions of volatile organic products which may exhibit a risk to the health of individuals. However, the attempts which have consisted in replacing the abovementioned resins with other formaldehyde-free resins have not been successful due to the very much higher cost and the poorer quality of the products obtained.

Nevertheless, it is still desirable for the content of formaldehyde in the ambient air of buildings for residential use to be as low as possible.

It is known to introduce formaldehyde scavengers in building materials such as plaster-based materials. However, because conventional scavengers used in building materials are not free of drawbacks, such as regulations issues, efficiency issues, compatibility issues, aging issues and/or costs issues, the market is still in need for alternative solutions.

It has been discovered that metal-organic framework compounds could act as formaldehyde scavengers in plaster-based materials. Accordingly, in one embodiment, the present invention concerns a plaster-based material comprising a metal-organic framework compound capable of trapping formaldehyde, said metal-organic framework having a porous volume from 0.2 to 2 cm³/g.

The term "plaster" according to the present invention refers to cured plaster, i.e. calcium sulfate dihydrate (CaSO₄, 2 H₂O) as well as uncured plaster, i.e. calcium sulfate hemihydrate (CaSO₄, ½ H₂O). For example, the term "plasterboard" may refer to the finished product formed of cured plaster but also to an in-process product wherein the plaster is not completely cured yet. In some cases, the term "plaster" will however be understood in its strict sense, i.e. calcium sulfate hemihydrate. This is for instance obviously the case when referring to the raw material for preparing the slurries. Similarly, when referring to an amount by dry weight of plaster, the plaster is considered in the form of calcium sulfate hemihydrate. The expression "plaster-based material" refers to a material consisting essentially of plaster, i.e. comprising for example at least 50 wt%, preferably at least 70 wt%, or even at least 80 wt% of plaster based on dry matter. Examples of plaster-based material include plasterboards, plaster blocks, dry plaster mixtures such as powder plaster premix, or wet plaster mixtures such as ready for use plasters.

Metal-organic framework (MOF) compounds are porous crystalline materials prepared by the self-assembly of metal ions and organic ligands. MOF compounds can have large pore volumes and apparent high surface areas. MOF compounds combine a structural and chemical diversity and the most striking advantage of MOF compounds over more traditional porous materials is the possibility to tune the host/guest interaction by choosing the appropriate building blocks, i.e. the metal ions and organic ligands, from which the MOF is formed.

The amount of MOF compound in the plaster-based material according to the invention is typically at least 0.01%, preferably at least 0.05, or even at least 0.1%, and/or up to 5%, preferably up to 2%, or even up to 1% by dry weight based on the dry weight of plaster.

MOF compounds according to the present invention are not particularly limited as soon as they are capable of trapping formaldehyde. They typically have a surface area from 500 to 2500 m²/g, preferably from 700 to 2300 m²/g. They typically have a pore volume from 0.2 to 2 cm³/g, preferably from 0.4 to 1 cm³/g, and a mean pore diameter from 0.2 to 50 nm, preferably from 0.3 to 20 nm, more preferably from 0.5 to 10, even more preferably from 0.7 to 5 nm. Surface area, pore volume and mean pore diameter are measured by BET method using N₂ according to ISO 15901-2:2006.

MOF compounds according to the present invention include metal ions or metal ion-containing clusters coordinated together with organic ligands to form one, two, or three-dimensional structures, preferably tree-dimensional structures.

MOF compounds may include one kind or more of metal ions. Metal ions may be selected from Ag, Al, Be, Ca, Cd, Ce, Co, Cr, Cu, Dy, Er, Eu, Fe, Ga, Gd, Ho, In, Li, Mg, Mn, Mo, Nd, Ni, Rh, Ru, Sc, Sm, Sr, Tb, Ti, Tm, V, W, Y, Yb, Zn and Zr, preferably from Al, Cu, Co, Zn, Fe, Mn, Ti and Ga. MOF based on metal ions selected for Al, Cu, Zn, Fe are particularly suitable for the present invention.

Metal ion-containing clusters, also commonly referred as secondary building units (SBU), are molecular complexes comprising one or more metal ions and ligands forming highly symmetric coordination geometries. Examples of metal-ion containing clusters are carboxylate-based clusters, such as dimetal tetracarboxylate clusters forming either planar or tetrahedral structures.

MOF compound according to the invention may include one kind or more of organic ligands. The organic ligands are multidentate ligands, such as bidentate, tridentate or even tetradentate ligands. They generally derive from compounds comprising at least O-donors and/or N-donors (i.e. functions comprising O or N atoms involved in the bounding with the metal ions of the MOF). Such compounds may also further comprise other heteroatoms such as S or P. The organic ligands may comprise both O-donors and N-donors. They can be charge-neutral, cationic or anionic. In the present invention, the term "derive" means that the ligands actually present in the MOF can correspond to a partially or completely deprotonated form of the compounds.

O-donor ligands may derive from compounds comprising carboxylic acid or alcohol functions. Example of O-donor organic ligands may derive from oxalic acid, malonic acid, succinic acid, glutaric acid, fumaric acid, 1,2,3-propanetricarboxylic acid, 1,4-phenylenediacetic acid, 1,2-benzenedicarboxylic acid, 1,3-benzenedicarboxylic acid, 1,4-benzenedicarboxylic acid, 1,2,4-benzenetricarboxylic acid, 1,3,5-benzenetricarboxylic acid, 1,2,4,5-benzenetetracarboxylic acid, 2,6-naphthalenedicarboxylic acid, biphenyl-4,4'-dicarboxylic acid, biphenyl-2,2'-dicarboxylic acid, biphenyl-3,4',5-tricarboxylic acid, biphenyl-3,3',5,5'-tetracarboxylic acid, 2,2'-[(1,2-dioxo-1,2-ethanediyl)diimino]dibenzoic acid, tetrakis(4-carboxyphenyl)methane, 4,4',4",4"'-(1,1,2,2-ethenetetrayl)tetrabenzoic acid, 1,3,5-tris(4-carboxyphenyl)benzene, 1,2,4,5-tetrakis(4-carboxyphenyl)benzene, 1,3,5-tris(4'-carboxy[1,1'-biphenyl]-4-yl)benzene, 5,5'-methylenediisophthalic acid, 9,10-anthracenedicarboxylic acid, dioxane, pyrazine-N,N'-dioxide, 4,4'-bipyridine-N,N'-dioxide. N-donor ligands may derive form compounds comprising amine functions or N-containing heterocyclic rings. Example of N-donor organic ligands may derive from tris(isobutlyaminoethyl)amine, piperazine, imidazole, 1*H*-1,2,3-triazole, 1*H*-1,2,4-triazole pyrazine, 4,4'-bipyridine, 2,2'-bipyridine, 4,4'-[(E)-1,2-ethenediyl]dipyridine, 1,3-bis(pyridin-4-yl)propane, 1,3-bis(1,2,4-triazol-1-yl)propane, 1,4-bis(imidazol-1-yl)butane, 4,4'-(1,4-phenylene)bis(1H-pyrazole), 4-(1H-tetrazol-5-yl)pyridine, 4-pyridinethiol, 1H-benzotriazole, 2,4,6-tri(4-pyridinyl)-1,3,5-triazine, 1,2,4,5-tetrakis(pyridin-4-yl)benzene, 1,4-diazabicyclo[2.2.2]octane, 1,3,5,7-tetraazatricyclo[3.3.1.1^{3,7}]decane. Example of organic ligand containing both O-donors and N-donors may derive from 4-pyridinecarboxylic acid, 3-pyridinecarboxylic acid, 3,5-pyridinedicarboxylic acid, 4,4'-(3,5-pyridinediyl)dibenzoic acid, 2,4,6-tris(4-carboxyphenyl)-1,3,5-triazine, 1-((4'-((pyridin-3-yloxy)methyl)biphenyl-4-yl)methylpyridinium-3-olate, 2,2',2",2"'-(1,4,7,10-tetraazacyclododecane-1,4,7,10-tetrayl)tetraacetic acid.

The compounds mentioned above, may be substituted by one or more substituents. The substituents are preferably independently selected from -OH, -NH₂, - OCH₃, -COOH, CHO, CO, NH-NH₂, SH; CO-NH-NH₂, -NR₂OH, -CH₃, -NH(CH₃), - N(CH₃)₂, -CN and halides, preferably -OH, -NH₂, -COOH, CHO, CO, NH-NH₂, SH; CO-NH-NH₂, -NR₂OH,-NH(CH₃). Accordingly, organic ligands may also derive for example from 2-hydroxyterephthalic acid, 2,5-dihydroxyterephthalic acid, 2,5-diaminoterephthalic acid, [1,1':4',1"]terphenyl-3,3',5,5'-tetracarboxylic acid, N,N'-dimethylpiperazine or 2-methylimidazole.

In one particular embodiment, the MOF compound according to the present is selected from zeolitic imidazolate framework (ZIF) compounds. ZIF compounds comprise tetrahedrally-coordinated transition metal ions, such as Fe, Co, Cu or Zn, connected by organic ligands derived from optionally substituted imidazole. Substituents may be one or more substituent independently selected from -OH, -NH₂, - OCH₃, -COOH, CHO, CO, NH-NH₂, SH; CO-NH-NH₂, -NR₂OH, -CH₃, -NH(C_{H}3), - N(CH₃)₂, -CN or halides, preferably -OH, -NH₂, -COOH, CHO, CO, NH-NH₂, SH; CO-NH-NH₂, -NR₂OH,-NH(CH₃). Example of organic ligands involved in ZIF compounds according to the invention comprise organic ligands deriving from imidazole and 2-methylimidazole.

In another particular embodiment, the MOF compound according to the invention is selected from Al-based MOF compounds comprising corner-sharing AlO₄(OH)₂ octahedron interconnected by the carboxylate groups of organic acids. Example of organic ligands involved in Al-based MOFs comprise organic ligands deriving from dicarboxilic acids such as fumaric acid, 1,4-benzenedicarboxylic acid, 2,6-naphthalenedicarboxylic acid, 2-amino-1,4-benzenedicarboxylic acid, 4,4'-biphenyldicarboxylic acid, 1,4-naphthalenedicarboxylic acid. In another particular embodiment, the MOF compound according to the invention is selected from Cu-based MOF compounds comprising Cu clusters interconnected by the carboxylate groups of organic acids. Example of organic ligands involved in Cu-based MOFs comprise ligands deriving from carboxylic acids such as fumaric acid, 1,4-benzenedicarboxylic acid, 2,6-naphthalenedicarboxylic acid, 2-amino-1,4-benzenedicarboxylic acid, 4,4'-biphenyldicarboxylic acid, 1,4-naphthalenedicarboxylic acid, 1,3,5-benzenetricarboxylic acid.

Examples of MOF according to the invention include:

| | | |
|---|---|---|
| Al(OH)(BDC) | MIL-100 (Cr) | PCN-17 (Y) |
| Al-MIL-53-X | MIL-100 (Sc) | PCN-17 (Yb) |
| BCF-1 | MIL-101 | PCN-19 |
| BCF-2 | MIL-101_NDC | PCN-5 |
| BIF-10 | MIL-103 | PCN-6 |
| BIF-11 | MIL-110 | PCN-6' |
| BIF-12 | MIL-45 (Co) | PCN-9 (Co) |
| BZ1 | MIL-45 (Fe) | PCN-9 (Fe) |
| CAU-5 | MIL-47 | PCN-9 (Mn) |
| CAUMOF-8 | MIL-53 (Cr) | SCIF-1 |
| CPF-1 | MIL-53(A1) | SCIF-2 |
| CPM-18-Nd | MIL-53(Fe) | SNU-M10 |
| CPM-18-Sm | MIL-53(Sc) | SNU-M11 |
| CPM-20 | MIL-69 | Sm(BTC)(H₂O) |
| CPM-24 | MIL-78 | Sr,Eu-Im |
| CPO-20 | MIL-78 (Y, Eu) | TIF-2 |
| CPO-21 | MIL-88(Sc) | TIF-A1 |
| CPO-22 | MIL-88B | TIF-A2 |
| CPO-26-Mg | MIL-88B(2OH) | TO-MOF |
| CPO-26-Mn | MIL-88C-Cr | TUDMOF-1 |
| CPO-27-Co | MIL-88C-Fe | TUDMOF-3 |
| CPO-27-Mg | MIL-88D | Tb(BTC)(DMF)₂·H₂O |
| CPO-27-Ni | MIL-96 | Tb(BTC)(H₂O) |
| CPO-27-Zn | MOF-1 (Yb-MOF) | Tb(TATB)(H₂O) |
| CdIF-1 | MOF-14 | Tb(TPA)(FA) |
| Ce-BTC | MOF-143 | Tb-BTC |
| Ce-MDIP1 | MOF-177 | Tm(BTC)(DMF)₂·H₂O |
| Ce-MDIP2 | MOF-2 | UL-MOF-1 |
| Co(Im)₄ | MOF-200 | UMCM-1 |
| Co/DOBDC | MOF-205 (DUT-6) | UMCM-150 |
| Co₃(BHTC)₂ | MOF-235 | UMCM-2 |
| Co₃(BTC)₂· 12H₂O | MOF-38 | UTSA-25a |
| Cr₃(BTC)₂ | MOF-39 | UTSA-36 |
| Cu(BDC-OH) | MOF-399 | UTSA-38 |
| Cu-BTC | MOF-5 | UiO-66(Zr) |
| Cu-TPTC | MOF-501 | UiO-66-X |
| Cu₂(bptc)(H₂O)₂ | MOF-502 | Y(TATB)(H₂O) |
| CuTATB-30 | MOF-505 | Y-BTC |
| CuTATB-60 | MOF-69B | YO-MOF |
| DO-MOF | MOF-74-Co | Yb(BTC)(DMF)₂·H₂O |
| DTO - MOF | MOF-74-Fe | Yb(BTC)(H₂O) |
| DUT-8(Ni) | MOF-74-Mg | ZBIF-1 |
| Dy(BTC)(DMF)₂·H₂O | MOF-74-Ni | ZIF-1 |
| Dy(TATB)(H₂O) | MOF-74-Zn | ZIF-10 |
| Er(BTC)(DMF)₂·H₂O | Mg/DOBDC | ZIF-2 |
| Er(BTC)(H₂O) | Mg₃(BHTC)₂ | ZIF-3 |
| Er(TATB)(H₂O) | Mg₃(BPT)₂(H2O)₄ | ZIF-4 |
| Eu(1,3,5-BTC) | Mg₃(NDC)₃ | ZIF-60 |
| Eu(BTC)(H₂O) | MgDOBDC | ZIF-61 |
| Eu(TATB)(H₂O) | Mn(BDC)(H₂O)₂ | ZIF-62 |
| Eu(TPA)(FA) | Mn₃(BHTC)₂ | ZIF-64 |
| Eu₁₋ₓTbₓ-MOFs | MnSO - MOF | ZIF-65 |
| Fe-BTC | NENU-11 | ZIF-67 |
| Ga-Im | NOTT-100 | ZIF-70 |
| Gd(BTC)(H₂O) | NOTT-101 | ZIF-76 |
| Gd(TATB)(H₂O) | NOTT-400 | ZIF-8 |
| Gd(TPA)(FA) | NOTT-401 | Zn(Im)(aIm) |
| HKUST-1 | Nd(BTC)(H₂O) | Zn-IM |
| HZIF-IMo | Ni-BDC | Zn/DOBDC |
| HZIF-1W | Ni/DOBDC | Zn₂(BTC) |
| Ho(BTC)(DMF)₂·H₂O | Ni₃(BTC)₂· 12H₂O | Zn₃(BTC)₂· 12H₂O |
| Ho(BTC)(H₂O) | NiDOBDC | Zn₃(NDC)₃ |
| Ho(TATB)(H₂O) | PCN-12 | ZnPO - MOF |
| IM-22 | PCN-12' | [Ag₄(HBTC)₂] |
| IRMOF-1 | PCN-13 | [Cd₃(TATB)₂] |
| IRMOF-8 | PCN-131 | [Mn₃(TATB)₂] |
| In-BTC | PCN-131' | nZIF-8 |
| In-NDC | PCN-132 | p-BDC-Co |
| MAF-4 | PCN-132' | porph @ MOM-10 |
| MCF-27 | PCN-17 (Dy) | rho-ZMOF |
| MIL-100 (Al) | PCN-17 (Er) | sod-ZMOF |

MOF according to the invention are preferably selected from;

| | | |
|---|---|---|
| Al(OH)(BDC) | MIL-53(Al) | PCN-9 (Co) |
| Al-MIL-53-X | MIL-53(Fe) | PCN-9 (Fe) |
| BCF-1 | MIL-69 | PCN-9 (Mn) |
| BCF-2 | MIL-78 | SCIF-1 |
| BIF-10 | MIL-88B | SCIF-2 |
| BIF-11 | MIL-88B(2OH) | SNU-M10 |
| BIF-12 | MIL-88C-Fe | SNU-M11 |
| BZ1 | MIL-88D | Sm(BTC)(H₂O) |
| CAU-5 | MIL-96 | TIF-2 |
| CAUMOF-8 | MOF-14 | TIF-A1 |
| CPF-1 | MOF-143 | TIF-A2 |
| CPM-18-Nd | MOF-177 | TO-MOF |
| CPM-18-Sm | MOF-2 | TUDMOF-1 |
| CPM-20 | MOF-200 | TUDMOF-3 |
| CPM-24 | MOF-205 (DUT-6) | Tb(TPA)(FA) |
| CPO-20 | MOF-235 | Tb-BTC |
| CPO-21 | MOF-38 | Tm(BTC)(DMF)₂·H₂O |
| CPO-22 | MOF-39 | UL-MOF-1 |
| CPO-26-Mg | MOF-399 | UMCM-1 |
| CPO-26-Mn | MOF-5 | UMCM-150 |
| CPO-27-Co | MOF-501 | UMCM-2 |
| CPO-27-Mg | MOF-502 | UTSA-25a |
| CPO-27-Ni | MOF-505 | UTSA-36 |
| CPO-27-Zn | MOF-69B | UTSA-38 |
| CdIF-1 | MOF-74-Co | UiO-66(Zr) |
| Ce-BTC | MOF-74-Fe | UiO-66-X |
| Ce-MDIP1 | MOF-74-Mg | Y(TATB)(H₂O) |
| Ce-MDIP2 | MOF-74-Ni | Y-BTC |
| Co(Im)₄ | MOF-74-Zn | YO-MOF |
| Co/DOBDC | Mg/DOBDC | ZBIF-1 |
| Co₃(BHTC)₂ | Mg₃(BHTC)₂ | ZIF-1 |
| Co₃(BTC)₂· 12H₂O | Mg₃(BPT)₂(H2O)₄ | ZIF-10 |
| Cu(BDC-OH) | Mg₃(NDC)₃ | ZIF-2 |
| Cu-BTC | MgDOBDC | ZIF-3 |
| Cu-TPTC | Mn(BDC)(H₂O)₂ | ZIF-4 |
| Cu₂(bptc)(H₂O)₂ | Mn₃(BHTC)₂ | ZIF-60 |
| CuTATB-30 | MnSO - MOF | ZIF-61 |
| CuTATB-60 | NENU-11 | ZIF-62 |
| DO-MOF | NOTT-100 | ZIF-64 |
| DTO-MOF | NOTT-101 | ZIF-65 |
| DUT-8(Ni) | NOTT-400 | ZIF-67 |
| Fe-BTC | NOTT-401 | ZIF-70 |
| HKUST-1 | Ni-BDC | ZIF-76 |
| HZIF-1Mo | Ni/DOBDC | ZIF-8 |
| HZIF-1W | Ni₃(BTC)₂· 12H₂O | Zn(Im)(aIm) |
| IM-22 | NiDOBDC | Zn-IM |
| IRMOF-1 | PCN-12 | Zn/DOBDC |
| IRMOF-8 | PCN-12' | Zn₂(BTC) |
| MAF-4 | PCN-13 | Zn₃(BTC)₂· 12H₂O |
| MCF-27 | PCN-131 | Zn₃(NDC)₃ |
| MIL-100 (Al) | PCN-131' | ZnPO - MOF |
| MIL-101 | PCN-132 | [Ag₄(HBTC)₂] |
| MIL-101_NDC | PCN-132' | [Mn₃(TATB)₂] |
| MIL-103 | PCN-17 (Y) | nZIF-8 |
| MIL-110 | PCN-19 | p-BDC-Co |
| MIL-45 (Co) | PCN-5 | porph @ MOM-10 |
| MIL-45 (Fe) | PCN-6 | rho-ZMOF |
| MIL-47 | PCN-6' | sod-ZMOF |

In a preferred embodiment, the MOF according to the present invention is selected from Al(fumarate)(OH), ZIF-8, HKUST-1.

Al(fumarate)(OH) consists in corner-sharing AlO₄(OH)₂ octahedron interconnected by the carboxylate groups of fumarate ligands to form lozenge-shaped 1D pores having 5.7 x 6.0 Å² free dimensions, a micropore volume of 0.48 cm³/g and a specific surface of 1000 m²/g. It exhibits a rigid character with an accessible permanent porosity. It is commercially available from BASF under the name Basolite A520.

HKUST-1 or CuBTC consists in Cu(II) clusters coordinated by 1,3,5-benzenetricarboxylic acids. It forms a structure presenting a large pore surrounded by eight small pores called side pockets. The windows between large pores and small pores exhibit a triangular shape limited by trimesic acid with a window size of 4.6 Å. It exhibits a micropore volume of 0.813 cm³/g, a specific surface of 2211 m²/g and an average pore size of 20-30 nm. It is commercially available from BASF under the name Basolite C300.

ZIF-8 is Zn(2-methylimidazolate)₂ and consists in zinc ions tetrahedrally-coordinated by four 2-methylimidazole rings. It is characterized by the sodalite zeolite-type structure with large cavities (11.6 Å) and small pore apertures (3.4 Å). It presents a micropore volume of 0.636 cm³/g and a specific surface of 1650-1800 m²/g. It is commercially available from BASF under the name Basolite Z-1200.

The plaster-based material according to the invention may further comprise process additives for adapting the properties of the slurries to the requirement of the process, as well as functional additives for modifying the properties of the end product. Process additives, well known in the art, may include adhesive agents, setting accelerators, retarding agents, fludifying agents, thickening agents or antifoaming agents. Functional additives also well known in the art may include foaming agents, biocides, water-proofing agents, fire retardants or strengthening agents. The plaster-based material may comprise up to 50%, preferably up to 30%, more preferably up to 20%, of dry weight of additives. For instance, the plaster-based material may comprise, based on 100 parts by weight of dry plaster:
- 0 to 15 parts of an adhesive agent, such as a poly(vinyl acetate), a poly(vinyl alcohol), a starch, in particular pretreated with an acid or pre-gelatinized, a dextrin or a vegetal flour, such as wheat or corn flour;
- 0 to 10 parts of a biocide, for example selected from carbamates, such as 3-iodoprop-2-yn-1-yl butylcarbamate, or pyrithione complexes;
- 0 to 10 parts of at least one water-proofing agent, such as a siloxane, a polysiloxane or a wax;
- 0 to 20 parts of at least one fire retarding agent, such as vermiculite, silica, in particular micrometric silica, or clay; and/or
- 0 to 20 parts of at least one strengthening agent, such as polymer fibers, mineral fibers, in particular glass or vegetal fibers.

The plaster-based material may also comprise other VOC (volatile organic compound) absorbing agents such as activated carbon or zeolites. The plaster-based material may comprise from 0.01 to 2%, preferably from 0.05 to 1% by dry weight of other VOC absorbing agents based on the dry weight of plaster.

In a particular embodiment, the plaster-based material according to the invention is a plasterboard. Plasterboards are panels comprising a plaster layer between two facing sheets, generally cardboard-based or glass fibers-based sheets. On an industrial scale, plasterboards are produced by a continuous process comprising three main steps: a shaping step, a setting step and a drying step. During the shaping step, aplaster slurry is prepared in a continuous mixer from calcined gypsum powder, water and specific additives for adapting the properties of the slurry and/or of the end product, as mentioned above. It is known in particular to add foaming agents or directly foam for reducing the density of the plasterboards. The slurry is then continuously spread on a first facing sheet carried by a conveyor to an extruder to from forming the plasterboard. After folding the edges of the first facing sheet, a second facing sheet is brought to the extruder. The extruder fits the second facing sheet against the slurry, smoothens the surfaces and reduces the thickness of the plasterboard to the desired value. In order to improve the mechanical properties of the plasterboards, it is known to form a denser plaster layer on one face and optionally on the edges of the plasterboards. To this end, a first layer of a denser slurry, called roller coating layer, is spread and formed on the first facing sheet before the main slurry is spread for forming a second layer, called the body of the plasterboard. The roller coating layer is generally a thin layer having typically a thickness of less than 2 mm, for example about 1 mm. The plaster ribbon thus obtained from the extruder is transported by a continuous conveyor on an adequate distance allowing the setting of the plaster to a sufficient level in order to be cut into panels of the desired dimension. The plasterboards are then dried in oven to eliminate the excess of water.

Conventionally, the plaster slurry comprises calcium sulfate hemihydrate (calcined gypsum) and the optional additives described above. The calcined gypsum undergoes a hydration reaction in the presence of water and is converted to calcium sulfate dihydrate (gypsum), resulting in the setting, or hardening, of the plasterboard. The composition of the plaster slurry depends on the kind of plasterboard to be produced. The plaster slurry generally comprises, based on 100 parts by weight of plaster, from 40 to 200 parts, preferably from 50 to 150 parts of water, from 2 to 10 parts of foam obtained by mixing water with a foaming agent, such as an alkylsulfate optionally in combination with an alkyethersulfate, and from 0.1 to 1 part of setting accelerators, such as hydrated calcium sulfate or potassium sulfate.

The plasterboard has typically a thickness from 6 to 25 mm, preferably from 10 to 25 mm.

The MOF compound can be introduced into the plasterboard in various ways.

According to a first embodiment, the MOF compound is added to the plaster slurry before the latter is deposited on the first facing sheet. The MOF compound can be added during the manufacture of the slurry, for example by simultaneously or successively introducing the calcined gypsum and the MOF compound into the water, or after the slurry has been obtained, for example by introducing the MOF compound at the mixer output or in a secondary mixer. The simultaneous addition of the constituents may be easier to carry out. However, the addition of the MOF compound after the preparation of the slurry may be preferred since the properties of MOF compounds may be affected by vigorous stirring. This embodiment provides a homogeneous distribution of the MOF compound into the plasterboard.

According to a second embodiment, the MOF compound is introduced in the roller coating layer. To this end, the MOF compound is introduced in a plaster slurry used for forming the roller coating layer, the main slurry used for forming the body of the plasterboard being generally free of MOF compound. This embodiment provides aplasterboard wherein the MOF compound is concentrated on one face of the plasterboard.

According to another embodiment, the MOF compound is added to the facing sheet or sheets. The MOF can be added during the manufacture of the facing sheet, for example to the suspension of cellulose fibers, or during the manufacture of the plasterboard, for example by spreading a composition comprising the MOF compound onto the first and/or second facing sheet before the slurry is spread on the first facing sheet and/or before the second facing sheet is fit on the slurry.

In another particular embodiment, the plaster-based material according to the invention is a plaster block. Plaster blocks are generally obtained by molding. To that end, a slurry is prepared in a mixer. After homogenization, the slurry is poured in molds and levelled to the molds height for eliminating the surplus. After sufficient setting for allowing the handling, the blocks are removed from the molds and dried in an oven for removing the excess of water.

Conventionally, the plaster slurry comprises calcium sulfate hemihydrate (calcined gypsum) and the optional additives described above. The composition of the plaster slurry depends on the kind of plaster plocks to be produced. The plaster slurry generally comprises, based on 100 parts by weight of plaster, from 40 to 200 parts, preferably from 50 to 150 parts of water, from 0.1 to 1 part of setting accelerators, such as hydrated calcium sulfate or potassium sulfate, from 0.1 to 2 parts of fludifying agents, from 0 to 1 part of retarding agents, and from 0 to 10 parts of water-proofing agents.

The plaster blocks have generally a thickness from 30 to 200 mm, preferably from 50 to 150 mm.

The MOF compound can be introduced into the plaster blocks during the preparation of the plaster slurry by simultaneously or successively introducing the calcined gypsum and the MOF compound into the water.

In another particular embodiment, the plaster-based material according to the invention is a dry mix or a wet mix (ready for use). Dry mixes are obtained by adding simultaneously or successively each component in a dry mixer. The MOF compound being in a powder form, it can be added to the dry mixes similarly to other components. Wet mixes can be obtained by adding simultaneously or successively each component in a mixer in presence of water, or by mixing a dry premix with water. The MOF compound can be introduced in wet mixes during the preparation of the dry premix or when mixing the premix with water.

The invention also relates to the use of a plaster-based material according to the present invention, in particular a plasterboard, a plaster block, a dry mix or a wet mix, for reducing the amount of formaldehyde in buildings. In addition, the plaster-based material according to the invention can also be used for reducing more generally the amount of VOC in buildings. Examples of VOC include benzene, toluene, undecane, 1,2-dichlorobenzene, 1,4-dichlorobenzene, tetrachloroethene and hexaldehyde.

The invention will be further illustrated with the following not limitative examples.

### EXAMPLES

Plasterboards comprising a body and a roller coating layer have been prepared from a first plaster slurry used to form the roller coating layer and a second plaster slurry used for forming the body of the plasterboard. The first plaster slurry comprises 100 parts by weight of plaster (CaSO₄, ½ H₂O), 77 parts of water, 5 parts of starch, 3.2 parts of fludifying agent and 0.5 part of setting accelerator. The second plaster slurry comprising 100 parts by weight of plaster (CaSO₄, ½ H₂O), 75 parts of water, 3 parts of foam (obtained from water comprising 1% by weight of sodium laurylsulfate), 5 parts of starch, 3 parts of fludifying agent and 0.5 part of setting accelerator. Plasterboard R1, used as a reference, is obtained from the first and second plaster slurries without further addition. For plasterboards I1 and I2 according to the present invention, respectively 2% by dry weight of Al(fumarate)(OH) and Zn(2-methylimidazolate)₂, based on the dry weight of plaster in the first plaster slurry, have been added to first plaster slurry used for forming the roller coating layer. Al(fumarate)(OH) is commercially available from MOF Technologies under the name Al(fumarate)(OH) Product Number: MTA1 or from BASF under the name Basolite A520.; Zn(2-methylimidazolate)₂ is commercially available from MOF Technologies under the name ZIF - 8 Product Number: MTA2 or from BASF under the name Basolite Z1200.

Plasterboards have been prepared as follows. The components for the first plaster slurry are weighted and mixed with a blade mixer at 1600 rpm for one minute for obtaining the first plaster slurry. A first cardboard sheet is disposed in a mold measuring 20 * 25 cm 12.5 mm in thickness. The first plaster slurry is poured on the first cardboard sheet and levelled at a thickness of around 1 mm to form the roller coating layer. The components for the second plaster slurry are weighted and mixed with a blade mixer at 1600 rpm for one minute for obtaining a homogeneous paste. The foam is prepared with the desired density and mixed with the paste in a paddle mixer at 250 rpm for obtaining the second plaster slurry. The second plaster slurry is poured on the roller coating layer and levelled at the height of the mold. A second cardboard sheet is disposed on the second plaster slurry and the mold is closed to maintain a pressure on the plasterboard. After setting, the plasterboard is removed from the mold and dried in an over at 40°C for 24h.

The ability for trapping formaldehyde has been tested for each of the plasterboards according to the standard ISO1600-23:2009 at a temperature of 23°C ± 2°C a relative humidity of 50 % ± 5% during the test. The loading factor is fixed at 0.4, the air change rate is fixed at 0.5 vol.h⁻¹ and the formaldehyde concentration is fixed at 100 µg.m⁻³. Table 1 shows the percentage of reduction of formaldehyde concentration for each of the plasterboards.

**Tableau 1**

| | R1 | I1 | I2 |
|---|---|---|---|
| MOF | - | Al(fumarate)(OH) | Zn(2-methylimidazolate)₂ |
| Reduction of formaldehyde | 5% | 46% | 54% |

## Claims

1. Plaster-based material comprising a metal-organic framework compound capable of trapping formaldehyde, said metal-organic framework having a porous volume from 0.2 to 2 cm³/g.

2. Plaster-based material according to claim 1, wherein the metal-organic framework compound has a surface area from 500 to 2500 m²/g.

3. Plaster-based material according to any one of claims 1 or 2, wherein the metal-organic framework compound has a mean pore diameter from 0.2 to 50 nm.

4. Plaster-based material according to any one of claims 1 to 3, wherein the metal-organic framework compound comprises a metal ion selected from Ag, Al, Be, Ca, Cd, Ce, Co, Cr, Cu, Dy, Er, Eu, Fe, Ga, Gd, Ho, In, Li, Mg, Mn, Mo, Nd, Ni, Rh, Ru, Sc, Sm, Sr, Tb, Ti, Tm, V, W, Y, Yb, Zn and Zr

5. Plaster-based material according to any one of claims 1 to 4, wherein the metal-organic framework compound comprises a metal ion selected from Al, Cu, Co, Zn, Fe, Mn, Ti and Ga.

6. Plaster-based material according to any one of claims 1 to 5, wherein the metal-organic framework compound comprises multidental organic ligands deriving from a compound comprising O-donors, such as acid carboxylic or alcohol functions, and/or N-donors, such as N-containing heterocyclic rings.

7. Plaster-based material according to any one of claims 1 to 6, wherein the metal-organic framework compound comprises multidental organic ligands deriving from compounds comprising carboxylic acid functions, alcohol functions, amine functions and/or N-containing heterocyclic rings, said compound being optionally substituted by one or more substituent independently selected from -OH, -NH₂, -OCH₃, -CH₃, - NH(CH₃), -N(CH₃)₂, -CN and halides.

8. Plaster-based material according to any one of claims 1 to 7, wherein the metal-organic framework compound comprises multidental organic ligands deriving from compounds selected from imidazole, 2-methylimidazole, fumaric acid, 1,4-benzenedicarboxylic acid, 2,6-naphthalenedicarboxylic acid, 2-amino-1,4-benzenedicarboxylic acid, 4,4'-biphenyldicarboxylic acid and 1,4-naphthalenedicarboxylic acid.

9. Plaster-based material according to any one of claims 1 to 8, wherein the metal-organic framework compound is selected from zeolitic imidazolate framework compounds, Al-based metal-organic framework compounds comprising corner-sharing AlO₄(OH)₂ octahedron interconnected by the carboxylate groups of organic acids, and Cu-based metal-organic framework compounds comprising Cu clusters interconnected by the carboxylate groups of organic acids.

10. Plaster-based material according to any one of claims 1 to 9, wherein the metal-organic framework compound is selected from Al(fumarate)(OH), Zn(2-methylimidazole)₂, HKUST-1 and ZIF-8.

11. Plaster-based material according to any one of claims 1 to 10, wherein the amount of metal-organic framework compound in said material is at least 0.01%, preferably at least 0.05, or even at least 0.1%, and/or up to 5%, preferably up to 2%, or even up to 1% by dry weight based on the dry weight of plaster.

12. Plaster-based material according to any one of claims 1 to 11, wherein said material is selected from a plasterboard, a plaster block, a dry mix or a wet mix.

13. Use of a plaster-based material according to any one of claims 1 to 12 for reducing the amount of formaldehyde in buildings.
